# EUROPÄISCHE PATENTANMELDUNG

(11) **EP 4 241 908 A2**
(43) Veröffentlichungstag der Anmeldung: **13.09.2023**
(21) Anmeldenummer: 23183292.4
(22) Anmeldetag: 30.07.2018
(51) Int. Cl.: B23B 47/32

(54) **VORRICHTUNG ZUM AUSBILDEN EINER BOHRUNG IN EINEM WERKSTÜCK**

(62) Teilanmeldung aus: 18186394.5
(71) Anmelder: AFW Holding GmbH, 4656 Kirchham (AT)
(72) Erfinder: Weingärtner, Dominik, 4643 Pettenbach (AT)
(74) Vertreter: Hafner & Kohl PartmbB

(57) **Zusammenfassung**

Vorrichtung (1) zum Ausbilden einer Bohrung (3) in einem Werkstück (4), umfassend
ein Bohrwerkzeug (2),
eine dem Bohrwerkzeug (2) zuordenbare oder zugeordnete Abstützeinrichtung (5), welche zur Abstützung des Bohrwerkzeugs (2) an wenigstens einem Abstützbereich (6) eingerichtet ist, wobei
die Abstützeinrichtung (5) einen wenigstens zwei Grundkörperelemente (8a, 8b) umfassenden länglichen Grundkörper (8) umfasst, wobei wenigstens ein Grundkörperelement (8a) zur Änderung der Längenabmessung des Grundkörpers (8) relativ zu wenigstens einem weiteren Grundkörperelement (8b) bewegbar gelagert ist.

## Beschreibung

Die Erfindung betrifft eine Vorrichtung zum Ausbilden einer Bohrung in einem Werkstück, umfassend ein längliches Bohrwerkzeug.

Entsprechende Vorrichtungen sind aus dem Bereich der spanenden Bearbeitung von Werkstücken in einer Vielzahl an Ausführungsformen dem Grunde nach bekannt. Hauptaufgabe bzw. -funktion entsprechender Vorrichtungen ist die Ausbildung von Bohrungen in Werkstücken.

Zur Ausbildung entsprechender Bohrungen umfassen entsprechende Vorrichtungen typischerweise ein Bohrwerkzeug. Das Bohrwerkzeug umfasst typischerweise ein antriebsseitiges Ende und diesem gegenüber liegend ein wenigstens eine Bohrschneide aufweisendes Ende.

Bei der Ausbildung von schwer zugänglichen Bohrungen in Werkstücken kann eine stabile Lagerung und Positionierung des Bohrwerkzeugs und somit eine exakte Ausbildung einer entsprechenden Bohrung eine Herausforderung darstellen, als das Bohrwerkzeug zwischen seinem antriebsseitigen Ende und seinem wenigstens eine entsprechende Bohrschneide aufweisenden Ende eine ununterstützte freie Länge "überwinden" muss.

Der Erfindung liegt die Aufgabe zugrunde, eine demgegenüber verbesserte Vorrichtung zum Ausbilden einer Bohrung in einem Werkstück anzugeben.

Die Aufgabe wird durch eine Vorrichtung gemäß Anspruch 1 gelöst. Die hierzu abhängigen Ansprüche betreffen mögliche Ausführungsformen der Vorrichtung.

Die hierin beschriebene Vorrichtung ist zum Ausbilden einer oder mehrerer Bohrungen in einem Werkstück eingerichtet. Die Vorrichtung ist insbesondere zum Ausbilden von Bohrungen an schwer zugänglichen Bohrpositionen bzw. an schwer zugänglichen Stellen eines Werkstücks, d. h. typischerweise an Stellen bzw. Positionen, welche mit einem Fräswerkzeug kaum oder nicht zugänglich sind, eingerichtet. Die Vorrichtung kann insbesondere zum Ausbilden länglicher Bohrungen, d. h. von Bohrungen mit großen Längenabmessungen, d. h. z. B. Längenabmessungen oberhalb 10 mm, in länglichen Werkstücken, d. h. in Werkstücken mit großen Längenabmessungen, d. h. z. B. Längenabmessungen oberhalb 50 mm, eingerichtet sein.

Eine mit der Vorrichtung ausbildbare Bohrung - bei welcher es sich grundsätzlich um eine Sackloch- oder um eine Durchgangsbohrung handeln kann - kann sonach an schwer zugänglichen Stellen bzw. Positionen eines mit einer Bohrung zu versehenen Werkstücks ausgebildet werden. Wie erwähnt, handelt es sich bei schwer zugänglichen Stellen bzw. Positionen insbesondere um solche Stellen bzw. Positionen, welche mit einem Fräswerkzeug kaum oder nicht zugänglich sind.

Eine mit der Vorrichtung ausbildbare Bohrung kann eine längliche Geometrie aufweisen. Die Bohrtiefen- bzw. Längenabmessung einer entsprechenden mit der Vorrichtung ausbildbaren Bohrung kann deutlich oberhalb der Durchmesserabmessung der Bohrung liegen. Bei einer mit der Vorrichtung ausbildbaren Bohrung kann es sich sonach um eine Tiefbohrung handeln.

Grundsätzlich sind mit der Vorrichtung Bohrungen jedweder Längenabmessung bzw. Tiefe ausbildbar.

Die Vorrichtung ist insbesondere zur Ausbildung zentrisch oder außerzentrisch bezüglich einer Symmetrie- bzw. Zentralachse eines z. B. rotationssymmetrischen Werkstücks liegender Bohrungen ausgebildet. Das Werkstück kann zumindest abschnittsweise, gegebenenfalls vollständig, hohlzylindrisch bzw. rotationssymmetrisch ausgeführt sein. Bei einem Werkstück, in welchem mit der Vorrichtung entsprechende Bohrungen ausbildbar sind, kann es sich sonach um ein zumindest abschnittsweise, gegebenenfalls vollständig, hohlzylindrisch und somit rotationssymmetrisch ausgeführtes Werkstück handeln. Das Werkstück kann sonach z. B. rohrartig bzw. -förmig ausgeführt sein.

Grundsätzlich sind mit der Vorrichtung auch Bohrungen in anderen Werkstückausführungen bzw. Geometrien ausbildbar. Die Vorrichtung ist nicht auf die Ausbildung von Bohrungen im Bereich des Innendurchmessers eines Werkstücks beschränkt, mit der Vorrichtung lassen sich auch Bohrungen im Bereich des Außendurchmessers eines Werkstücks ausbilden.

Unabhängig von seiner Geometrie ist das Werkstück typischerweise aus einem spanend bearbeitbaren Material, d. h. typischerweise einem Metall, wie z. B. Stahl, gebildet.

Zum Ausbilden entsprechender Bohrungen umfasst die Vorrichtung ein Bohrwerkzeug. Das Bohrwerkzeug kann länglich ausgeführt sein. Als entsprechendes Bohrwerkzeug kommt im Allgemeinen jedwedes Bohrwerkzeug in Betracht, mit welchem eine Bohrung in einem Werkstück ausbildbar ist. Bei dem Bohrwerkzeug kann es sich um einen Tieflochbohrer bzw. um einen Einlippenbohrer handeln; andere Ausführungen des Bohrwerkzeugs sind denkbar. Das Bohrwerkzeug umfasst typischerweise ein antriebsseitiges Ende und diesem gegenüber liegend ein wenigstens eine Bohrschneide aufweisendes Ende. Das Bohrwerkzeug ist damit einends mit einer Antriebsschnittstelle zur kraft- bzw. momentübertragenden Kopplung mit einer eine Antriebskraft bzw. eine Antriebsmoment erzeugenden, insbesondere motorischen, Antriebseinrichtung und andernends mit wenigstens einer Bohrschneide versehen.

Die Vorrichtung umfasst weiterhin eine dem Bohrwerkzeug zuordenbare oder zugeordnete Abstützeinrichtung. Die Abstützeinrichtung ist zur Abstützung des Bohrwerkzeugs an einem oder mehreren durch die Abstützeinrichtung gebildeten Abstützbereichen eingerichtet. Die Abstützbereiche sind typischerweise entlang der bzw. einer Längsachse des Bohrwerkzeugs anordenbar oder angeordnet. Die Abstützeinrichtung ist sonach insbesondere zur Abstützung des Bohrwerkzeugs über einen oder mehrere entlang der bzw. einer Längsachse des Bohrwerkzeugs anordenbare oder angeordnete Abstützbereiche eingerichtet. Entsprechend ist die Abstützeinrichtung über entsprechende entlang der bzw. einer Längsachse des Bohrwerkzeugs anordenbare oder angeordnete Abstützbereiche insbesondere zur Längenabstützung des Bohrwerkzeugs eingerichtet. Wie sich im Weiteren ergibt, umfasst die Abstützeinrichtung typischerweise ein oder mehrere Abstützelemente, welche jeweils wenigstens einen entsprechenden Abstützbereich bilden.

Die Abstützeinrichtung umfasst einen wenigstens zwei Grundkörperelemente umfassenden länglichen Grundkörper. Dabei ist wenigstens ein Grundkörperelement zur Änderung der Längenabmessung des Grundkörpers relativ zu wenigstens einem weiteren Grundkörperelement bewegbar gelagert. Die durch die bewegbare Lagerung wenigstens eines Grundkörperelements relativ zu wenigstens einem weiteren Grundkörperelement gegebene Möglichkeit der Änderung der Längenabmessung des Grundkörpers erlaubt eine individuelle Anpassung der Länge der Abstützeinrichtung und damit auch eine individuelle Anpassung der Länge des Bereichs, in welchem über die Abstützeinrichtung Abstützbereiche zur Abstützung des Bohrwerkzeugs gebildet werden können.

Die Bewegung eines bewegbar gelagerten Grundkörperelements relativ zu wenigstens einem weiteren, gegebenenfalls ebenso bewegbar gelagerten, Grundkörperelement beinhaltet typischerweise eine translatorische Bewegungskomponente, d. h. eine Bewegungskomponente entlang einer Translationsachse, bzw. stellt eine solche dar. Eine entsprechende Translationsachse erstreckt sich typischerweise parallel zu der Längsachse des Bohrwerkzeugs. Bei der Bewegung eines bewegbar gelagerten Grundkörperelements relativ zu wenigstens einem weiteren Grundkörperelement kann es sich beispielsweise um eine Fahr- oder um eine Schiebebewegung handeln.

Über die wie beschriebene mehrteilige Ausführung des Grundkörpers und die damit verbundene Möglichkeit, wenigstens ein Grundkörperelement relativ zu wenigstens einem weiteren Grundkörperelement zu bewegen, ist eine (längen)variable Abstützmöglichkeit des Bohrwerkzeugs für eine Vielzahl an unterschiedlichen Bohranwendungen, d. h. insbesondere für eine Vielzahl an im Hinblick auf ihre Positionierung an oder in dem Werkstück und/oder ihre Längenabmessungen unterschiedlichen Bohrungen und/oder Werkstücken gegeben. In jedem Fall kann aufgrund der bedarfsweise und individuell (längen)variabel gestaltbaren Abstützmöglichkeit des Bohrwerkzeugs durch die Abstützeinrichtung eine stabile Abstützung bzw. Lagerung bzw. Positionierung des Bohrwerkzeugs und somit eine exakte Ausbildung entsprechender Bohrungen gewährleistet werden, als das Bohrwerkzeug auch bei schwer zugänglichen Bohrpositionen zwischen seinem antriebsseitigen Ende und seinem wenigstens eine entsprechende Bohrschneide aufweisenden Ende keine lange ununterstützte freie Länge "überwinden" muss.

Es liegt damit eine verbesserte Vorrichtung zum Ausbilden einer Bohrung in einem Werkstück vor.

Jeweilige Grundkörperelemente können insbesondere zwischen ersten und zweiten Positionen, welche Positionen jeweils mit bestimmten Längenabmessungen des Grundkörpers korrelieren, relativ zueinander bewegbar sein. Mithin kann wenigstens ein Grundkörperelement relativ zu wenigstens einem weiteren Grundkörperelement zwischen einer ersten Position, d. h. z. B. einer ausgefahrenen Position, welche mit einer ersten Längenabmessung des Grundkörpers korreliert, und wenigstens einer weiteren Position, d. h. z. B. einer eingefahrenen Position, welche mit einer von der ersten Längenabmessung des Grundkörpers verschiedenen weiteren Längenabmessung des Grundkörpers korreliert, bewegbar gelagert sein. Selbstverständlich ist es möglich, dass jeweilige Grundkörperelemente auch in zwischen jeweiligen ersten und zweiten Positionen liegende Zwischenpositionen bewegbar sein können. Jeweilige Grundkörperelemente können sonach gegebenenfalls stufenlos zwischen jeweiligen ersten und zweiten Positionen bewegbar sein.

Der Grundkörper kann teleskopartig verlängerbar ausgeführt sein. Der Grundkörper kann sonach eine mehrere Teleskopelemente umfassende Teleskopanordnung oder einen Bestandteil einer solche bilden. Dabei kann ein erstes Grundkörperelement ein erstes Teleskopelement bilden oder mit einem solchen gekoppelt sein und wenigstens ein weiteres Grundkörperelement ein relativ zu dem ersten Teleskopelement teleskopartig geführt bewegbar gelagertes weiteres Teleskopelement bilden oder mit einem solchen gekoppelt sein.

An wenigstens einem Grundkörperelement kann wenigstens ein einen Abstützbereich für das Bohrwerkzeug bildendes Abstützelement angeordnet oder ausgebildet sein. Mithin können jeweilige Grundkörperelemente jeweils mit wenigstens einem entsprechenden Abstützelement ausgestattet sein. Gleichwohl ist es auch möglich, dass einzelne Grundkörperelemente nicht mit einem entsprechenden Abstützelement ausgestattet sein können. Die vermittels der Abstützeinrichtung realisierbare Abstützwirkung kann sonach durch Anzahl und Anordnung jeweiliger Abstützelemente gezielt eingestellt werden. In einer beispielhaften Konfiguration kann an dem bzw. einem ersten Grundkörperelement und an wenigstens einem weiteren Grundkörperelement jeweils wenigstens ein einen Abstützbereich für das Bohrwerkzeug bildendes Abstützelement angeordnet oder ausgebildet sein.

Ein jeweiliges Abstützelement kann z. B. durch eine offene oder geschlossene Aufnahmeöffnung für das Bohrwerkzeug gebildet sein bzw. eine solche umfassen. Die Abmessungen einer entsprechenden Aufnahmeöffnung, d. h. insbesondere an deren Querschnittsgeometrie, ist typischerweise an die Abmessungen des Bohrwerkzeugs, d. h. insbesondere an dessen Querschnittsgeometrie, angepasst, sodass das Bohrwerkzeug stabil unterstützt werden kann. In einer geschlossenen Ausführung einer jeweiligen Aufnahmeöffnung kann das Bohrwerkzeug eine jeweilige Aufnahmeöffnung zumindest abschnittsweise, gegebenenfalls vollständig, durchsetzen.

Es ist denkbar, jeweilige Abstützelemente (beschädigungs- bzw. zerstörungsfrei) lösbar an jeweiligen Grundkörperelementen anzuordnen bzw. auszubilden, was weitere Freiheitsgrade im Hinblick auf eine individuell anpassbare Abstützwirkung eröffnet. Die lösbare Anordnung bzw. Ausbildung von Abstützelementen an Grundkörperelementen kann z. B. durch das form- und/oder kraftschlüssige Zusammenwirken abstützelementseitiger Befestigungselemente und, insbesondere korrespondierender, grundkörperelementseitiger Befestigungselemente realisiert sein. Entsprechende Befestigungselemente können z. B. durch Rast- oder Schraubbefestigungselemente ausgebildet sein bzw. solche umfassen. Prinzipiell sind auch andere als form- und/oder kraftschlüssige Befestigungsmöglichkeiten, d. h. z. B. magnetische Befestigungsmöglichkeiten, denkbar.

Der Grundkörper kann zumindest abschnittsweise, gegebenenfalls vollständig, als Hohlprofil ausgebildet sein. Entsprechend können auch jeweilige Grundkörperelemente zumindest abschnittsweise, gegebenenfalls vollständig, als Hohlprofil ausgebildet sein. Der Grundkörper bzw. jeweilige Grundkörperelemente weisen sonach ein inneres Volumen auf, in welchem eine oder mehrere Funktionskomponenten der Abstützeinrichtung angeordnet oder ausgebildet sein können.

Die Ausbildung des Grundkörpers bzw. jeweiliger Grundkörperelemente als Hohlprofil ist insbesondere für die erwähnte teleskopartig verlängerbare Ausführungsform des Grundkörpers zweckmäßig. Innerhalb des als Hohlprofil ausgebildeten Grundkörpers kann entsprechend z. B. eine ein erstes Teleskopelement und wenigstens ein relativ zu dem ersten Teleskopelement teleskopartig bewegbar gelagertes weiteres Teleskopelement umfassende Teleskopanordnung angeordnet oder ausgebildet sein. Die bereits erwähnte Möglichkeit, dass der Grundkörper einen Bestandteil einer mehrere Teleskopelemente umfassenden Teleskopanordnung bildet, kann sonach derart realisiert sein, dass jeweilige Teleskopelemente innerhalb des Hohlprofils angeordnet oder ausgebildet sind. Dabei kann ein erstes Teleskopelement mit einem ersten Grundkörperelement gekoppelt, d. h. insbesondere bewegungsgekoppelt, und wenigstens ein weiteres Teleskopelement mit wenigstens einem weiteren Grundkörperelement gekoppelt, d. h. insbesondere bewegungsgekoppelt, sein. Die Kopplung bzw. Bewegungskopplung jeweiliger Grundkörperelemente und jeweiliger Teleskopelemente kann z. B. durch das form- und/oder kraft- und/oder stoffschlüssige Zusammenwirken von grundkörperelementseitigen Kopplungselementen und, insbesondere korrespondierenden, teleskopelementseitigen Kopplungselementen realisiert sein.

Entsprechende Kopplungselemente können z. B. durch Rast- oder Schraubbefestigungselemente ausgebildet sein bzw. solche umfassen. Prinzipiell sind auch andere als form- und/oder kraftschlüssige Kopplungsmöglichkeiten, d. h. z. B. magnetische Kopplungsmöglichkeiten, denkbar.

Die Vorrichtung kann wenigstens eine dem Grundkörper zuordenbare oder zugeordnete Spanneinrichtung umfassen, welche zur Erzeugung einer ein bewegbar gelagertes Grundkörperelement relativ zu wenigstens einem weiteren Grundkörperelement bewegenden Spannkraft eingerichtet ist. Die Spannkraft kann derart wirken, dass wenigstens ein bewegbar gelagertes Grundkörperelement stets in distaler Richtung, d. h. typischerweise stets in Richtung des mit jeweiligen Schneidelementen versehenen Endes des Bohrwerkzeugs bewegt ist, was eine zuverlässige Abstützung des Bohrwerkzeugs entlang dessen Längsachse gewährleistet. Die Spanneinrichtung kann z. B. durch eine entsprechend vorgespannte Feder ausgebildet sein oder eine solche umfassen.

In diesem Zusammenhang ist zu erwähnen, dass der Vorrichtung auch eine, insbesondere motorische, Antriebseinrichtung zuordenbar oder zugeordnet sein kann, welche zur Erzeugung einer ein bewegbar gelagertes Grundkörperelement relativ zu wenigstens einem weiteren Grundkörperelement bewegenden Kraft eingerichtet ist. Bewegungen von Grundkörperelementen können sonach auch durch einen motorischen Antrieb gesteuert werden. Insbesondere in diesem Zusammenhang ist auch die Implementierung von Bewegungs- bzw. Wegstreckensensoren, über welche sich eine exakte längenmäßige Auslenkung des Grundkörpers bzw. jeweiliger Grundkörperelemente ermitteln lässt, denkbar. Mithin kann der Begriff "Spanneinrichtung" gegebenenfalls auch eine entsprechende Antriebseinrichtung umfassen; eine entsprechende Spanneinrichtung kann damit gegebenenfalls auch eine entsprechende Antriebseinrichtung umfassen.

Die Abstützeinrichtung bzw. die Vorrichtung kann, insbesondere (beschädigungs- bzw. zerstörungsfrei) lösbar, an einem dem Bohrwerkzeug zuordenbaren oder zugeordneten Bearbeitungskopf befestigt sein. Zur Befestigung der Abstützeinrichtung bzw. der Vorrichtung an einem entsprechenden Bearbeitungskopf kann die Abstützeinrichtung einen an dem Grundkörper, insbesondere an einem Grundkörperelement, angeordneten oder ausgebildeten Befestigungskörper umfassen, welcher über ein, insbesondere mechanisches, Befestigungselement, insbesondere (beschädigungs- bzw. zerstörungsfrei) lösbar, an einem korrespondierenden Befestigungselement des Bearbeitungskopfs befestigbar bzw. befestigt ist. Die Befestigung des Befestigungskörpers an dem Bearbeitungskopf kann z. B. durch das form- und/oder kraftschlüssige Zusammenwirken wenigstens eines befestigungskörperseitigen Befestigungselements und wenigstens eines, insbesondere korrespondierenden, bearbeitungskopfseitigen Befestigungselements realisiert sein. Entsprechende formschlüssig zusammenwirkende Befestigungselemente können z. B. durch ein Formschlusselement seitens des Befestigungskörpers, d. h. z. B. einen schwalbenschwanzartig bzw. -förmig ausgebildeten Befestigungsabschnitt, und ein hierzu korrespondierendes Formschlusselement des Bearbeitungskopfs, d. h. z. B. eine korrespondierende Aufnahme für den schwalbenschwanzartig- bzw. - förmig ausgebildeten Befestigungsabschnitt, ausgebildet sein bzw. solche umfassen. Entsprechende kraftschlüssig zusammenwirkende Befestigungselemente können z. B. durch Schraubbefestigungselemente ausgebildet sein bzw. solche umfassen.

Ein entsprechender Bearbeitungskopf ist typischerweise mit einer mit dem antriebsseitigen Ende des Bohrwerkzeugs koppelbaren oder gekoppelten, insbesondere motorischen, Antriebseinrichtung ausgestattet. Ein entsprechender Bearbeitungskopf umfasst sonach typischerweise wenigstens ein mit dem Bohrwerkzeug koppelbares oder gekoppeltes Kraftübertragungselement, über welche sich eine seitens einer entsprechenden Antriebseinrichtung erzeugbare bzw. erzeugte Antriebskraft auf das Bohrwerkzeug übertragen lässt.

Für alle Ausführungsformen gilt, dass das freie Ende des das freie Ende des Grundkörpers bildenden Grundkörperelements mit einem, z. B. durch eine Anschlagfläche gebildeten Anschlagelement, ausgebildet sein kann bzw. ein solches umfassen kann. Das Anschlagelement kann im Betrieb der Vorrichtung an einem, z. B. durch eine Gegenanschlagfläche gebildeten, Gegenanschlagelement des Werkstücks anliegen und derart eine stabile Abstützung des Grundkörpers gewährleisten, was sich positiv auf die Abstützung des Bohrwerkzeugs auswirken kann. Für das Beispiel eines hohlzylindrischen Werkstücks kann ein entsprechendes Gegenanschlagelement z. B. durch eine im Innenvolumen des Werkstücks ausgebildete radiale Stufe gebildet sein.

Die Erfindung betrifft auch eine Abstützeinrichtung für eine wie beschriebene Vorrichtung. Die Abstützeinrichtung ist zur Abstützung eines Bohrwerkzeugs an wenigstens einem Abstützbereich eingerichtet und umfasst einen wenigstens zwei Grundkörperelemente umfassenden länglichen Grundkörper, wobei wenigstens ein Grundkörperelement zur Änderung der Längenabmessung des Grundkörpers relativ zu wenigstens einem weiteren Grundkörperelement bewegbar gelagert ist. Sämtliche Ausführungsformen im Zusammenhang mit der Vorrichtung gelten analog für die Abstützeinrichtung.

Die Erfindung betrifft weiterhin ein Bearbeitungszentrum zur spanenden Bearbeitung eines Werkstücks, umfassend wenigstens eine wie beschriebene Vorrichtung. Sämtliche Ausführungsformen im Zusammenhang mit der Vorrichtung gelten analog für das Bearbeitungszentrum. Das Bearbeitungszentrum umfasst typischerweise wenigstens einen Bearbeitungskopf. Die Abstützeinrichtung ist typischerweise, insbesondere (beschädigungs- bzw. zerstörungsfrei) lösbar, an einem dem Bohrwerkzeug bzw. der Vorrichtung zuordenbaren oder zugeordneten Bearbeitungskopf befestigt. Der Bearbeitungskopf ist typischerweise in wenigstens einem translatorischen und/oder rotatorischen Bewegungsfreiheitsgrad an einer Lagereinrichtung des Bearbeitungszentrums bewegbar gelagert. Das Bearbeitungszentrum kann ein Magazin für Werkzeuge, d. h. insbesondere für Bohrwerkzeuge, umfassen, in welchem Werkzeuge, d. h. insbesondere für Bohrwerkzeuge, gelagert werden können. Die Einbringung und/oder Ausbringung von Werkzeugen aus einem entsprechenden Magazin kann, z. B. vermittels einer geeigneten Handlingeinrichtung, wie z. B. einem Handlingroboter, automatisiert erfolgen. Schließlich betrifft die Erfindung ein Verfahren zum Ausbilden einer Bohrung, beispielsweise einer länglichen Sacklochbohrung, in einem Werkstück. Verfahrensgemäß wird eine wie beschriebene Vorrichtung zum Ausbilden der Bohrung in Betrieb genommen bzw. verwendet. Sämtliche Ausführungsformen im Zusammenhang mit der Vorrichtung gelten analog für das Verfahren.

Ein Ausführungsbeispiel der Erfindung wird im Folgenden im Zusammenhang mit den Zeichnungen näher erläutert. Dabei zeigt:
- Fig. 1 - 6: jeweils eine Prinzipdarstellung einer Vorrichtung gemäß einem ersten Ausführungsbeispiel; und
- Fig. 7: eine Prinzipdarstellung einer Vorrichtung gemäß einem weiteren Ausführungsbeispiel.

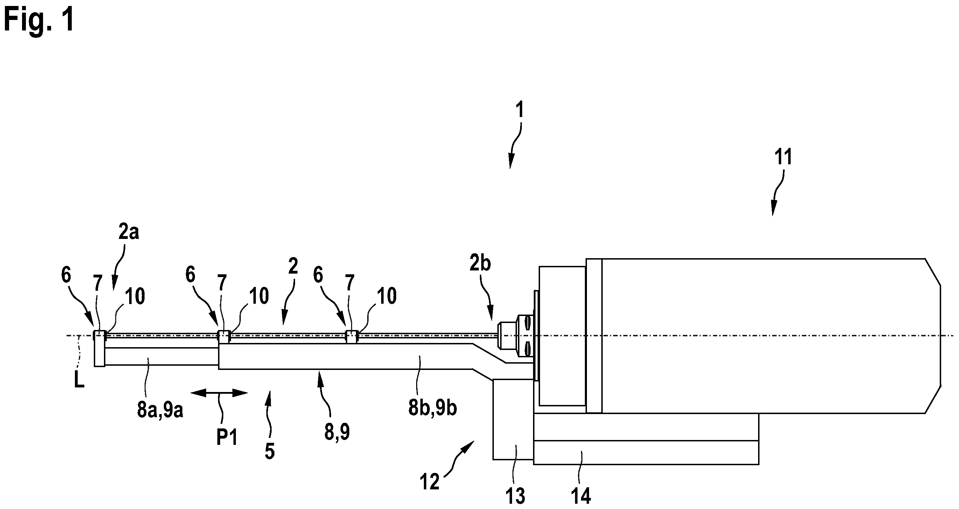

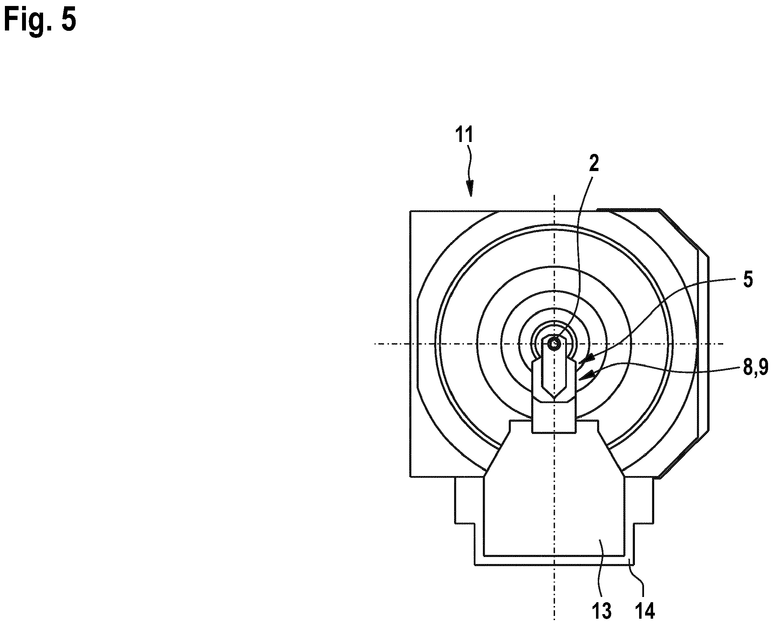

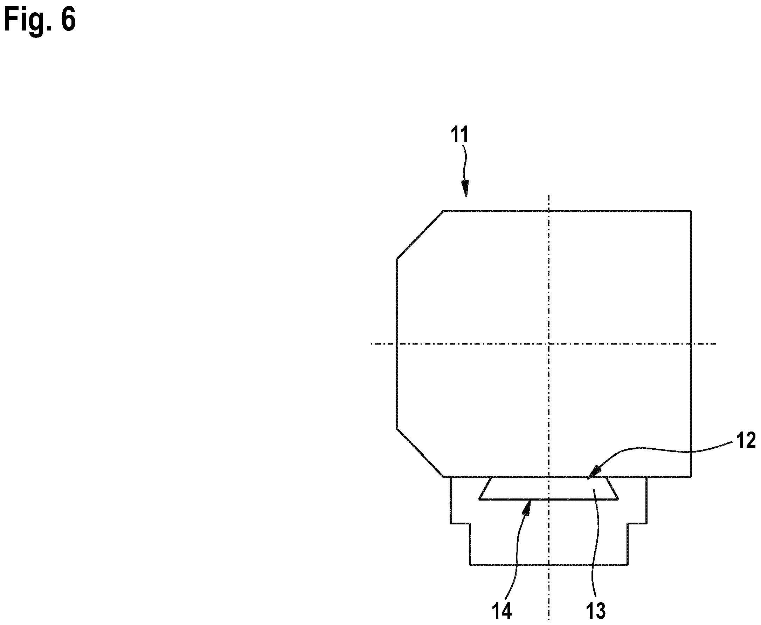

Die Fig. 1 - 6 zeigen jeweils eine Prinzipdarstellung einer Vorrichtung 1 gemäß einem ersten Ausführungsbeispiel. Die Vorrichtung 1 ist dabei in den Fig. 1 - 4 in einer Seitenansicht, in Fig. 5 in einer Frontansicht und in Fig. 6 in einer Rückansicht.

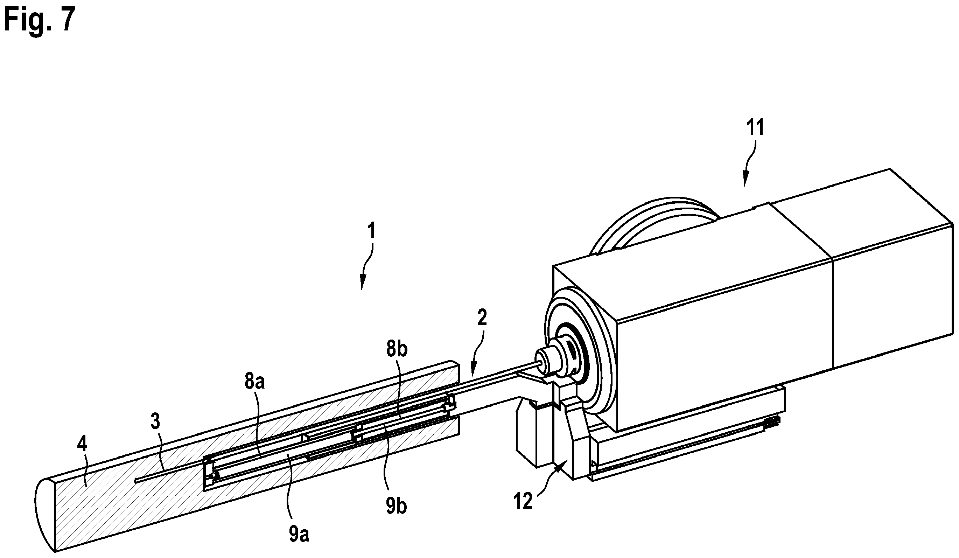

Fig. 7 zeigt eine Prinzipdarstellung einer Vorrichtung 1 gemäß einem weiteren Ausführungsbeispiel in einem Betriebszustand in einer perspektivischen Ansicht.

Die Vorrichtung 1 ist zum Ausbilden einer oder mehrerer Bohrungen 3 in einem Werkstück 4 eingerichtet (vgl. Fig. 7). Mit der Vorrichtung 1 lassen sich Bohrungen 3 an schwer zugänglichen Bohrpositionen, d. h. an Stellen bzw. Positionen, welche mit einem Fräswerkzeug kaum oder nicht zu erreichen sind, ausbilden. Insbesondere lassen sich mit der Vorrichtung 1 längliche Bohrungen 3, d. h. Bohrungen 3 mit großen Längenabmessungen, d. h. z. B. Längenabmessungen oberhalb 10 mm, in länglichen Werkstücken 4, d. h. in Werkstücken 4 mit großen Längenabmessungen, d. h. z. B. Längenabmessungen oberhalb 50 mm, ausbilden. Die Bohrtiefen- bzw. Längenabmessung der mit der Vorrichtung 1 ausbildbaren Bohrungen 3 können deutlich oberhalb der Durchmesserabmessung der Bohrungen 3 liegen. Bei den mit der Vorrichtung 1 ausbildbaren Bohrungen 3 kann es sich sonach um Tiefbohrungen handeln.

Die Vorrichtung 1 kann zur Ausbildung zentrisch oder außerzentrisch bezüglich einer Symmetrie- bzw. Zentralachse eines rotationssymmetrischen Werkstücks 4 liegender Bohrungen 3 in einem hohlzylindrisch ausgeführten Werkstück 4 ausgebildet sein (vgl. Fig. 7). Bei einem Werkstück 4, in welchem mit der Vorrichtung 1 entsprechende Bohrungen 3 ausbildbar sind, kann es sich sonach um ein hohlzylindrisch und somit rotationssymmetrisch ausgeführtes Werkstück 4 handeln (vgl. Fig. 7). Das Werkstück 4 kann sonach z. B. rohrartig bzw. -förmig ausgeführt sein. Mit der Vorrichtung 1 lassen sich jedoch auch Bohrungen 3 in anderen Werkstückausführungen bzw. -geometrien ausbilden. Die Vorrichtung 1 ist nicht auf die Ausbildung von Bohrungen 3 im Bereich des Innendurchmessers eines Werkstücks 4 beschränkt, mit der Vorrichtung 1 lassen sich auch Bohrungen 3 im Bereich des Außendurchmessers eines Werkstücks 4 ausbilden.

Unabhängig von seiner Geometrie ist das Werkstück 4 aus einem spanend bearbeitbaren Material, d. h. typischerweise einem Metall, wie z. B. Stahl, gebildet.

Zum Ausbilden entsprechender Bohrungen 3 umfasst die Vorrichtung 1 ein Bohrwerkzeug 2. Bei dem Bohrwerkzeug 2 kann es sich z. B. um einen Tieflochbohrer bzw. um einen Einlippenbohrer handeln; andere Ausführungen des Bohrwerkzeugs 2 sind denkbar. Das Bohrwerkzeug 2 umfasst ein antriebsseitiges Ende 2b und diesem gegenüber liegend ein wenigstens eine Bohrschneide (nicht gezeigt) aufweisendes Ende 2a. Das Bohrwerkzeug 2 ist damit einends mit einer Antriebsschnittstelle zur kraft- bzw. momentübertragenden Kopplung mit einer eine Antriebskraft bzw. eine Antriebsmoment erzeugenden, insbesondere motorischen, Antriebseinrichtung (nicht gezeigt) und andernends mit wenigstens einer Bohrschneide versehen.

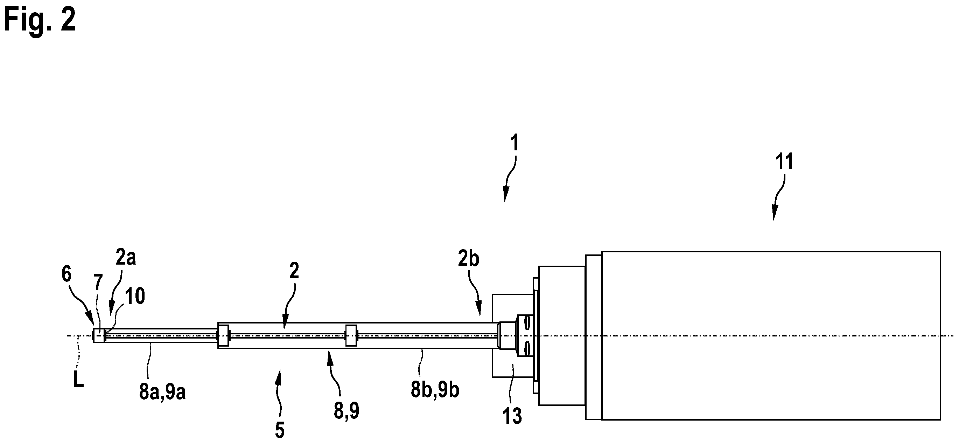

Die Vorrichtung 1 umfasst weiterhin eine dem Bohrwerkzeug 2 zuordenbare bzw. zugeordnete Abstützeinrichtung 5. Die Abstützeinrichtung 5 ist zur Abstützung des Bohrwerkzeugs 2 an mehreren durch die Abstützeinrichtung 5 gebildeten Abstützbereichen 6 eingerichtet. Anhand der Fig. 1, 2 ist ersichtlich, dass die Abstützbereiche 6 entlang der Längsachse L des Bohrwerkzeugs 2 angeordnet sind. Die Abstützeinrichtung 5 ist sonach zur Abstützung des Bohrwerkzeugs 2 über mehrere entlang der Längsachse L des Bohrwerkzeugs 2 angeordnete Abstützbereiche 6 und somit zur Längenabstützung des Bohrwerkzeugs 2 eingerichtet. Wie sich im Weiteren ergibt, umfasst die Abstützeinrichtung 5 mehrere Abstützelemente 7, welche jeweils wenigstens einen entsprechenden Abstützbereich 6 bilden.

Die Abstützeinrichtung 5 bzw. die Vorrichtung 1 ist, insbesondere (beschädigungs- bzw. zerstörungsfrei) lösbar, an einem dem Bohrwerkzeug 2 zuordenbaren bzw. zugeordneten Bearbeitungskopf 11 befestigt. Zur Befestigung der Abstützeinrichtung 5 bzw. der Vorrichtung 1 an dem Bearbeitungskopf 11 umfasst die Abstützeinrichtung 5 einen an dem Grundkörper 8, insbesondere an dem zweiten Grundkörperelement 8b, angeordneten bzw. ausgebildeten Befestigungskörper 12, welcher über ein Befestigungselement 13, insbesondere (beschädigungs- bzw. zerstörungsfrei) lösbar, an einem korrespondierenden Befestigungselement 14 des Bearbeitungskopfs 11 befestigbar ist. Die Befestigung des Befestigungskörpers 12 an dem Bearbeitungskopf 11 ist in den in den Fig. gezeigten Ausführungsbeispielen beispielhaft durch das formschlüssige Zusammenwirken des befestigungskörperseitigen Befestigungselements 13 und eines korrespondierenden bearbeitungskopfseitigen Befestigungselements 14 realisiert. Die formschlüssig zusammenwirkenden Befestigungselemente 13, 14 sind durch ein Formschlusselement seitens des Befestigungskörpers 12, d. h. einen schwalbenschwanzartig bzw. -förmig ausgebildeten Befestigungsabschnitt, und ein hierzu korrespondierendes Formschlusselement des Bearbeitungskopfs 11, d. h. eine korrespondierende Aufnahme für den schwalbenschwanzartig- bzw. -förmig ausgebildeten Befestigungsabschnitt, ausgebildet (vgl. Fig. 6).

Der Bearbeitungskopf 11 ist typischerweise mit einer mit dem antriebsseitigen Ende des Bohrwerkzeugs 2 koppelbaren bzw. gekoppelten, insbesondere motorischen, Antriebseinrichtung (nicht gezeigt) ausgestattet. Der Bearbeitungskopf 11 umfasst sonach typischerweise ein mit dem Bohrwerkzeug 2 koppelbares bzw. gekoppeltes Kraftübertragungselement (nicht bezeichnet), über welche sich eine seitens einer entsprechenden Antriebseinrichtung erzeugbare bzw. erzeugte Antriebskraft auf das Bohrwerkzeug 2 übertragen lässt.

Die Abstützeinrichtung 5 umfasst einen zwei Grundkörperelemente 8a, 8b umfassenden länglichen Grundkörper 8. Wenngleich in den Fig. nur zwei Grundkörperelemente 8a, 8b gezeigt sind, könnte der Grundkörper 8 auch mehr als zwei Grundkörperelemente 8a, 8b umfassen. Dabei ist ein erstes Grundkörperelement 8a zur Änderung der Längenabmessung des Grundkörpers 8 relativ zu einem zweiten Grundkörperelement 8b bewegbar gelagert. Die durch die bewegbare Lagerung des ersten Grundkörperelements 8a relativ zu dem zweiten Grundkörperelement 8b gegebene Möglichkeit der Änderung der Längenabmessung des Grundkörpers 8 erlaubt eine individuelle Anpassung der Länge der Abstützeinrichtung 5 und damit auch eine individuelle Anpassung der Länge des Bereichs, in welchem über die Abstützeinrichtung 5 Abstützbereiche 6 zur Abstützung des Bohrwerkzeugs 2 gebildet werden können.

Die in den Fig. 1, 2 durch den Pfeil P1 angedeutete Bewegung des bewegbar gelagerten ersten Grundkörperelements 8a relativ zu dem zweiten Grundkörperelement 8b beinhaltet eine translatorische Bewegungskomponente, d. h. eine Bewegungskomponente entlang einer Translationsachse, bzw. stellt eine solche dar. Die Translationsachse erstreckt sich parallel zu der Längsachse L des Bohrwerkzeugs 2. Bei der Bewegung des bewegbar gelagerten ersten 8a Grundkörperelements relativ zu dem zweiten Grundkörperelement 8b kann es sich um eine Fahr- bzw. um eine Schiebebewegung handeln.

Über die mehrteilige Ausführung des Grundkörpers 8 und die damit verbundene Möglichkeit, das erste Grundkörperelement 8a relativ zu dem zweiten Grundkörperelement 8b zu bewegen, ist eine (längen)variable Abstützmöglichkeit des Bohrwerkzeugs 2 für eine Vielzahl an unterschiedlichen Bohranwendungen, d. h. insbesondere für eine Vielzahl an im Hinblick auf ihre Positionierung bzw. Längenabmessungen unterschiedlichen Bohrungen 3 und/oder Werkstücken 4 gegeben. Aufgrund der bedarfsweise und individuell (längen)variabel gestaltbaren Abstützmöglichkeit des Bohrwerkzeugs 2 durch die Abstützeinrichtung 5 kann eine stabile Abstützung bzw. Lagerung des Bohrwerkzeugs 2 und somit eine exakte Ausbildung entsprechender Bohrungen 3 gewährleistet werden, als das Bohrwerkzeug 2 zwischen seinem antriebsseitigen Ende 2b und seinem wenigstens eine entsprechende Bohrschneide aufweisenden Ende 2a keine lange ununterstützte freie Länge "überwinden" muss.

An den Grundkörperelementen 8a, 8b ist jeweils wenigstens ein einen Abstützbereich 6 für das Bohrwerkzeug 2 bildendes Abstützelement 7 angeordnet bzw. ausgebildet. Mithin sind die Grundkörperelemente 8a, 8b jeweils mit wenigstens einem entsprechenden Abstützelement 7 ausgestattet. Wenngleich in den Fig. nicht gezeigt, ist es auch möglich, dass ein Grundkörperelement 8a, ,8b nicht mit einem entsprechenden Abstützelement 7 ausgestattet ist. Die vermittels der Abstützeinrichtung 5 realisierbare Abstützwirkung kann sonach durch Anzahl und Anordnung jeweiliger Abstützelemente 7 gezielt eingestellt werden.

In den in den Fig. gezeigten Ausführungsbeispielen sind jeweilige Abstützelemente 7 beispielhaft durch eine geschlossene Aufnahmeöffnung 10 für das Bohrwerkzeug 2 gebildet bzw. umfassen jeweilige Abstützelemente 7 jeweils eine entsprechende Aufnahmeöffnung 10. Die Abmessungen der jeweiligen Aufnahmeöffnungen 10, d. h. insbesondere deren Querschnittsgeometrie, sind an die Abmessungen des Bohrwerkzeugs 2, d. h. insbesondere dessen Querschnittsgeometrie, angepasst, sodass das Bohrwerkzeug 2 stabil unterstützt werden kann. In der in den Fig. gezeigten geschlossenen Ausführung jeweiligen Aufnahmeöffnungen 10 durchsetzt das Bohrwerkzeug 2 die Aufnahmeöffnungen 10.

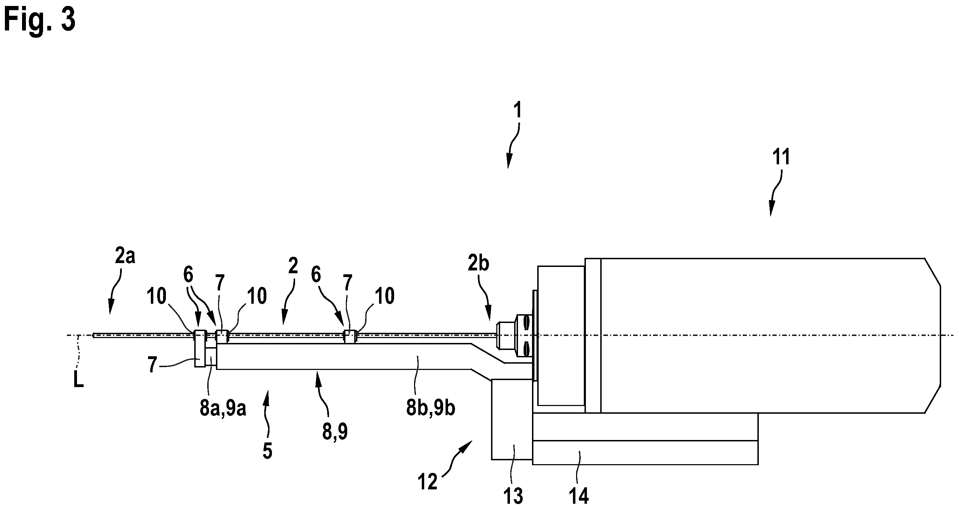

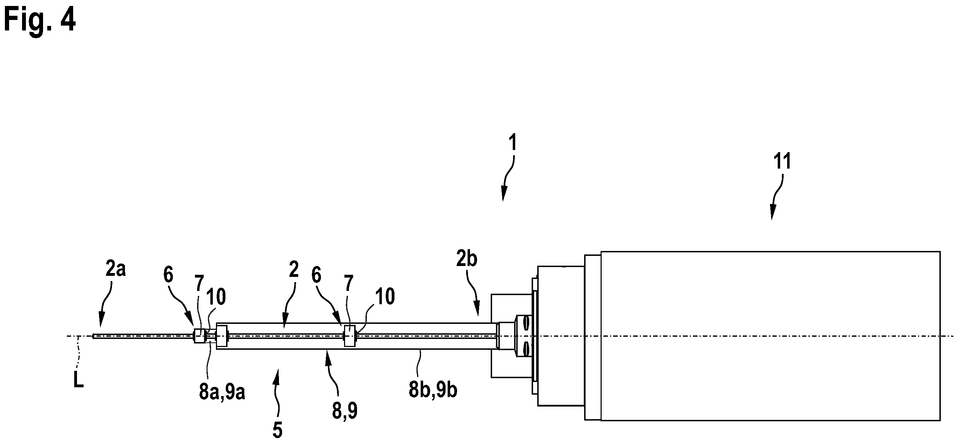

Anhand der Fig. 1 - 4 ist ersichtlich, dass das erste Grundkörperelement 8a zwischen einer ersten und einer zweiten Position, welche Positionen jeweils mit bestimmten Längenabmessungen des Grundkörpers 8 korrelieren, relativ zu dem zweiten Grundkörperelement 8b bewegbar ist. Mithin ist das erste Grundkörperelement 8a relativ zu dem zweiten Grundkörperelement 8b zwischen einer in Fig. 1, 3 gezeigten ersten Position, d. h. einer ausgefahrenen Position, welche mit einer ersten Längenabmessung des Grundkörpers 8 korreliert, und einer in Fig. 2, 4 gezeigten Position, d. h. einer eingefahrenen Position, welche mit einer von der ersten Längenabmessung des Grundkörpers 8 verschiedenen, d. h. verkürzten, Längenabmessung des Grundkörpers 8 korreliert, bewegbar gelagert. Selbstverständlich ist es möglich, dass das erste Grundkörperelement 8a auch in zwischen der ersten und zweiten Position liegende Zwischenpositionen bewegbar sein kann. Das erste Grundkörperelement 8a kann sonach gegebenenfalls stufenlos zwischen der ersten und der zweiten Position bewegbar sein.

Der Grundkörper 8 ist in den in den Fig. gezeigten Ausführungsbeispielen beispielhaft teleskopartig verlängerbar ausgeführt. Der Grundkörper 8 umfasst sonach eine zwei Teleskopelemente 9a, 9b umfassende Teleskopanordnung 9. Dabei bildet das erste Grundkörperelement 8a das erste Teleskopelement 9a und das zweite Grundkörperelement 8b ein relativ zu dem ersten Teleskopelement 9a teleskopartig bewegbar gelagertes zweites Teleskopelement 9b.

Es ist denkbar, jeweilige Abstützelemente 7 (beschädigungs- bzw. zerstörungsfrei) lösbar an jeweiligen Grundkörperelementen 8a, 8b anzuordnen bzw. auszubilden, was weitere Freiheitsgrade im Hinblick auf eine individuell anpassbare Abstützwirkung eröffnet. Die lösbare Anordnung bzw. Ausbildung der Abstützelemente 7 an den Grundkörperelementen 8a, 8b kann z. B. durch das form- und/oder kraftschlüssige Zusammenwirken abstützelementseitiger Befestigungselemente (nicht gezeigt) und, insbesondere korrespondierender, grundkörperelementseitiger Befestigungselemente (nicht gezeigt) realisiert sein. Entsprechende Befestigungselemente können z. B. durch Rast- oder Schraubbefestigungselemente ausgebildet sein bzw. solche umfassen. Prinzipiell sind auch andere als form- und/oder kraftschlüssige Befestigungsmöglichkeiten, d. h. z. B. magnetische Befestigungsmöglichkeiten, denkbar.

Der Grundkörper 8 kann - wie sich aus dem in Fig. 7 gezeigten Ausführungsbeispiel ergibt - zumindest abschnittsweise, gegebenenfalls vollständig, als Hohlprofil ausgebildet sein. Entsprechend können auch die Grundkörperelemente 8a, 8b zumindest abschnittsweise, gegebenenfalls vollständig, als Hohlprofil ausgebildet sein. Der Grundkörper 8 bzw. jeweilige Grundkörperelemente 8a, 8b können sonach ein inneres Volumen aufweisen, in welchem eine oder mehrere Funktionskomponenten der Abstützeinrichtung 5 angeordnet oder ausgebildet sein können.

Die Ausbildung des Grundkörpers 8 bzw. der Grundkörperelemente 8a, 8b als Hohlprofil ist für die teleskopartig verlängerbare Ausführungsform des Grundkörpers 8 zweckmäßig. Innerhalb des als Hohlprofil ausgebildeten Grundkörpers 8 - wie in Fig. 7 gezeigt - entsprechend eine zwei relativ zueinander bewegbar teleskopartig gelagerte Teleskopelemente 9a, 9b umfassende Teleskopanordnung 8 angeordnet bzw. ausgebildet sein. Die Möglichkeit, dass der Grundkörper 8 einen Bestandteil einer mehrere Teleskopelemente 9a, 9b umfassenden Teleskopanordnung 9 bildet, kann sonach derart realisiert sein, dass jeweilige Teleskopelemente 9a, 9b innerhalb des Hohlprofils angeordnet bzw. ausgebildet sind. Dabei kann ein erstes Teleskopelement 9a mit dem ersten Grundkörperelement 8a gekoppelt und das zweite Teleskopelement 9b mit dem zweiten Grundkörperelement 8b gekoppelt sein. Die Kopplung jeweiliger Grundkörperelemente 8a, 8b und jeweiliger Teleskopelemente 9a, 9b kann z. B. durch das form- und/oder kraft- und/oder stoffschlüssige Zusammenwirken von grundkörperelementseitigen Kopplungselementen (nicht gezeigt) und, insbesondere korrespondierenden, teleskopelementseitigen Kopplungselementen (nicht gezeigt) realisiert sein. Entsprechende Kopplungselemente können z. B. durch Rast- oder Schraubbefestigungselemente ausgebildet sein bzw. solche umfassen. Prinzipiell sind auch andere als form- und/oder kraftschlüssige Kopplungsmöglichkeiten, d. h. z. B. magnetische Kopplungsmöglichkeiten, denkbar.

Für alle Ausführungsbeispiele gilt, dass die Vorrichtung 1 eine dem Grundkörper 8 zuordenbare bzw. zugeordnete Spanneinrichtung (nicht gezeigt) umfassen kann, welche zur Erzeugung einer das bewegbar gelagerte erste Grundkörperelement 8a relativ zu dem zweiten Grundkörperelement 8b bewegenden Spannkraft eingerichtet ist. Die Spannkraft kann derart wirken, dass das erste Grundkörperelement 8a stets in distaler Richtung, d. h. typischerweise stets in Richtung des mit jeweiligen Schneidelementen versehenen (vorderen) Endes 2a des Bohrwerkzeugs 2 bewegt ist, was eine zuverlässige Abstützung des Bohrwerkzeugs 2 entlang dessen Längsachse L gewährleistet. Die Spanneinrichtung kann z. B. durch eine entsprechend vorgespannte Feder ausgebildet sein oder eine solche umfassen.

In diesem Zusammenhang ist zu erwähnen, dass der Vorrichtung 1 auch eine, insbesondere motorische, Antriebseinrichtung (nicht gezeigt) zuordenbar bzw. zugeordnet sein kann, welche zur Erzeugung einer das bewegbar gelagerte erste Grundkörperelement 8a relativ zu dem zweiten Grundkörperelement 8b bewegenden Kraft eingerichtet ist. Bewegungen der Grundkörperelemente 8a, 8b könnten sonach auch durch einen motorischen Antrieb gesteuert werden. Insbesondere in diesem Zusammenhang ist auch die Implementierung von Bewegungs- bzw. Wegstreckensensoren, über welche sich eine exakte längenmäßige Auslenkung des Grundkörpers 8 bzw. der Grundkörperelemente 8a, 8b ermitteln lässt, denkbar.

Für alle Ausführungsformen gilt ferner, dass das freie Ende des Grundkörpers 8 bildende Grundkörperelement 8a mit einem, z. B. durch eine Anschlagfläche gebildeten, Anschlagelement (nicht bezeichnet) ausgebildet bzw. ein solches umfassen kann. Das Anschlagelement kann - wie in Fig. 7 gezeigt - im Betrieb der Vorrichtung 1 an einem, z. B. durch eine Gegenanschlagfläche gebildeten, Gegenanschlagelement des Werkstücks 4 anliegen und derart eine stabile Abstützung des Grundkörpers 8 gewährleisten, was sich positiv auf die Abstützung des Bohrwerkzeugs 2 auswirken kann. Für das in Fig. 7 gezeigte Beispiel eines hohlzylindrischen Werkstücks 4 kann ein entsprechendes Gegenanschlagelement z. B. durch eine im Innenvolumen des Werkstücks 4 ausgebildete radiale Stufe gebildet sein.

Die Vorrichtung 1 kann in einem Bearbeitungszentrum (nicht gezeigt) zur spanenden Bearbeitung eines Werkstücks 4 verwendet werden. Das Bearbeitungszentrum umfasst wenigstens einen Bearbeitungskopf 11. Die Abstützeinrichtung 5 bzw. Vorrichtung 1 ist typischerweise, insbesondere (beschädigungs- bzw. zerstörungsfrei) lösbar, an dem Bearbeitungskopf 11 befestigt. Der Bearbeitungskopf 11 ist typischerweise in wenigstens einem translatorischen und/oder rotatorischen Bewegungsfreiheitsgrad an einer z. B. flanschartigen Lagereinrichtung (nicht gezeigt) des Bearbeitungszentrums bewegbar gelagert. Das Bearbeitungszentrum kann ein Magazin für Werkzeuge, d. h. insbesondere für Bohrwerkzeuge 2, umfassen, in welchem Werkzeuge, d. h. insbesondere für Bohrwerkzeuge 2, gelagert werden können. Die Einbringung und/oder Ausbringung von Werkzeugen aus einem entsprechenden Magazin kann, z. B. vermittels einer geeigneten Handlingeinrichtung, wie z. B. einem Handlingroboter, automatisiert erfolgen.

Vermittels der Vorrichtung 1 lässt sich ein Verfahren zum Ausbilden einer Bohrung 3 in einem Werkstück 4 implementieren. Die Vorrichtung 1 wird verfahrensgemäß zur Ausbildung einer Bohrung 3 in dem Werkstück 4 in Betrieb genommen.

## Patentansprüche

1. Vorrichtung (1) zum Ausbilden einer Bohrung (3) in einem Werkstück (4), umfassend ein Bohrwerkzeug (2), **gekennzeichnet durch** eine dem Bohrwerkzeug (2) zuordenbare oder zugeordnete Abstützeinrichtung (5), welche zur Abstützung des Bohrwerkzeugs (2) an wenigstens einem Abstützbereich (6) eingerichtet ist, wobei die Abstützeinrichtung (5) einen wenigstens zwei Grundkörperelemente (8a, 8b) umfassenden länglichen Grundkörper (8) umfasst, wobei wenigstens ein Grundkörperelement (8a) zur Änderung der Längenabmessung des Grundkörpers (8) relativ zu wenigstens einem weiteren Grundkörperelement (8b) bewegbar gelagert ist.

2. Vorrichtung nach Anspruch 1, **dadurch gekennzeichnet, dass** wenigstens ein Grundkörperelement (8a) relativ zu wenigstens einem weiteren Grundkörperelement (8b) zwischen einer ersten Position, welche mit einer ersten Längenabmessung des Grundkörpers (8) korreliert, und wenigstens einer weiteren Position, welche mit einer von der ersten Längenabmessung des Grundkörpers (8) verschiedenen weiteren Längenabmessung des Grundkörpers (8) korreliert, bewegbar gelagert ist.

3. Vorrichtung nach Anspruch 1 oder 2, **dadurch gekennzeichnet, dass** der Grundkörper (8) teleskopartig verlängerbar ausgeführt ist, wobei ein erstes Grundkörperelement (8a) ein erstes Teleskopelement (9a) bildet oder mit einem solchen gekoppelt ist und wenigstens ein weiteres Grundkörperelement (8b) ein relativ zu dem ersten Teleskopelement (9a) teleskopartig bewegbar gelagertes weiteres Teleskopelement (9b) bildet oder mit einem solchen gekoppelt ist.

4. Vorrichtung nach einem der vorhergehenden Ansprüche, **dadurch gekennzeichnet, dass** an wenigstens einem Grundkörperelement (8a, 8b) wenigstens ein einen Abstützbereich (6) für das Bohrwerkzeug (2) bildendes Abstützelement (7) angeordnet oder ausgebildet ist.

5. Vorrichtung nach Anspruch 4, **dadurch gekennzeichnet, dass** an dem ersten Grundkörperelement (8a) und an wenigstens einem weiteren Grundkörperelement (8b) jeweils wenigstens ein einen Abstützbereich (6) für das Bohrwerkzeug (2) bildendes Abstützelement (7) angeordnet oder ausgebildet ist.

6. Vorrichtung nach Anspruch 4 oder 5, **dadurch gekennzeichnet, dass** ein Abstützelement (7) durch eine offene oder geschlossene Aufnahmeöffnung (10) für das Bohrwerkzeug (2) gebildet ist.

7. Vorrichtung nach einem der vorhergehenden Ansprüche, **dadurch gekennzeichnet, dass** der Grundkörper (8) zumindest abschnittsweise als Hohlprofil ausgebildet ist.

8. Vorrichtung nach Anspruch 7, **dadurch gekennzeichnet, dass** innerhalb des als Hohlprofil ausgebildeten Grundkörpers (8) eine ein erstes Teleskopelement (9a) und wenigstens ein relativ zu dem ersten Teleskopelement (9a) teleskopartig geführt bewegbar gelagertes weiteres Teleskopelement (9b) umfassende Teleskopanordnung (9) angeordnet oder ausgebildet ist.

9. Vorrichtung nach Anspruch 8, **dadurch gekennzeichnet, dass** das erste Teleskopelement (9a) mit einem ersten Grundkörperelement (8a) gekoppelt und das wenigstens eine weitere Teleskopelement (9b) mit wenigstens einem weiteren Grundkörperelement (8b) gekoppelt ist.

10. Vorrichtung nach einem der vorhergehenden Ansprüche, **gekennzeichnet durch** eine dem Grundkörper (8) zugeordnete Spanneinrichtung, welche zur Erzeugung einer ein bewegbar gelagertes Grundkörperelement (8a) relativ zu wenigstens einem weiteren Grundkörperelement (8b) bewegenden Spannkraft eingerichtet ist.

11. Vorrichtung nach einem der vorhergehenden Ansprüche, **dadurch gekennzeichnet, dass** die Abstützeinrichtung (5) lösbar an einem dem Bohrwerkzeug (2) zuordenbaren oder zugeordneten Bearbeitungskopf (11) befestigt ist.

12. Vorrichtung nach Anspruch 11, **dadurch gekennzeichnet, dass** die Abstützeinrichtung (5) einen an dem Grundkörper (8), insbesondere an einem Grundkörperelement (8a, 8b), angeordneten oder ausgebildeten Befestigungskörper (12) umfasst, welcher über ein Befestigungselement (13) an einem Befestigungselement (14) des Bearbeitungskopfs (11) befestigbar ist.

13. Abstützeinrichtung (5) für eine Vorrichtung (1) nach einem der vorhergehenden Ansprüche.

14. Bearbeitungszentrum, umfassend wenigstens eine Vorrichtung (1) nach einem der Ansprüche 1 bis 12.

15. Verfahren zum Ausbilden einer Bohrung (3) in einem Werkstück (4), **dadurch gekennzeichnet, dass** eine Vorrichtung (1) nach einem der Ansprüche 1 bis 12 zum Ausbilden der Bohrung (3) verwendet wird.
